# FASCICULE DE BREVET EUROPEEN

(11) **EP 0 614 691 B1**
(45) Date de publication et mention de la délivrance du brevet: **15.11.2000**
(21) Numéro de dépôt: 94400473.8
(22) Date de dépôt: 04.03.1994
(51) Int. Cl.: B01D 53/34

(54) **Procédé de traitement des effluents produits lors de l'incinération des déchets industriels et/ou ménagers et produit issu de ce procédé**
Verfahren zur Behandlung von Abgasen aus Müllverbrennungsanlagen und dabei entstehendes Produkt
Process for treating effluents from waste incinerating installations and product obtained by this process

(30) Priorité: 09.03.1993 FR 9302708
(43) Date de publication de la demande: 14.09.1994
(73) Titulaire: CONSTRUCTIONS INDUSTRIELLES DE LA MEDITERRANEE- CNIM, F-75008 Paris (FR)
(72) Inventeur: Tabaries, Frank Georges Jacques, F-83000 Toulon (FR); Sebaoun, Albert, F-83000 Toulon (FR)
(74) Mandataire: Durand, Yves Armand Louis

(56) Documents cités:
- EP-A- 0 208 490
- EP-A- 0 211 458
- EP-A- 0 230 139
- EP-A- 0 414 292
- EP-A- 0 479 350
- EP-A- 0 518 606
- DE-A- 4 109 044
- FR-A- 2 547 210
- MüLL UND ABFALL vol. 23, no. 4 , Avril 1991 , BERLIN pages 229 - 235 XP000200944 J. VICINUS UND R. KNOCHE 'Abscheidung von Dioxinen, Furanen und Schwermetallen in einer Gasreinigung'

## Description

La présente invention concerne un procédé de traitement des effluents produits par l'incinération des déchets ménagers et/ou industriels,selon le préambule de la revendication 1.

Un procédé connu de ce type est décrit dans le document EP-A-0518606.

On sait que ces effluents contiennent des polluants dont des gaz acides tels que l'acide chlorhydrique, l'acide fluorhydrique, l'anhydride sulfureux et l'anhydride sulfurique, des métaux lourds gazeux tels que le plomb, le mercure, le cadmium, et des particules solides appelées cendres volantes.

On connaît des procédés de traitement de ces effluents. L'un de ces procédés consiste d'une part à neutraliser les gaz acides avec des oxydes ou des hydroxydes de calcium (CaO,Ca(OH)₂)pour former les sels de calcium correspondants, tout en condensant et absorbant les métaux lourds sur les cendres volantes, et d'autre part à séparer, par filtration dans un dépoussiéreur, les particules solides de la phase gazeuse. Les produits des réactions de neutralisation, le réactif en excès et les cendres volantes sont collectés en sortie de dépoussiéreur et on stocke ce mélange après l'avoir conditionné dans des sacs étanches.

Dans ce procédé, la chaux, qui est le réactif de neutralisation, est peu soluble dans l'eau et est donc utilisée sous la forme d'une suspension dans une solution saturée.

Pour éviter la décantation des particules de chaux et le bouchage des tuyauteries de l'installation, la suspension doit être agitée en permanence, ce qui peut provoquer l'érosion du bac de préparation de cette suspension lorsque la vitesse d'agitation est trop importante.

De plus l'eau carbonatée forme au contact de la chaux des carbonates de calcium,sels insolubles qui se déposent sur Les parois du bac de préparation de la suspension et sur les parois internes des tuyauteries de l'installation, ce qui oblige à arrêter fréquemment l'installation pour la nettoyer.

Par ailleurs,l'oxyde ou l'hydroxyde de calcium pulvérulent utilisé est constitué de grains poreux présentant une surface de réaction importante. Mais les produits de réaction de neutralisation tels que le chlorure de calcium (CaC1₂)le sulfate de calcium (CaSO_{4,}) le fluorure de calcium (CaF₂)colmatent les pores de ces grains et gênent la diffusion des gaz acides vers le coeur du grain qui n'est pas alors utilisé pour la réaction de neutralisation. D'où la nécessité d'utliser un excès de réactif par rapport à la stoechiométrie de la réaction de neutralisation de ces gaz.

Il en résulte une augmentation du flux des résidus solides à stocker ensuite.

Un autre inconvénient de ce procédé connu réside dans le fait que les sels de calcium formés lors de ces réactions de neutralisation contiennent en particulier du chlorure de calcium qui s'hydrate au contact de la vapeur d'eau des fumées pour former l'hexahydrate de calcium (CaC1₂, 6H₂O), sel déliquescent qui au contact d'une paroi froide forme avec les cendres volantes, également contenues dans les fumées à traiter, un agglomérat qui peut obstruer les circuits de transport de ces résidus et provoquer l'arrêt de l'installation de traitement des effluents.

Par ailleurs, le problème du traitement des résidus solides, constitués du mélange des produits de réaction de neutralisation et de filtration des particules solides. ainsi que des réactifs en excès, restent entier dans ce procédé.

Une solution consiste à fondre ces résidus et à vitrifer le solide fondu. Mais la chaux est un oxyde réfractaire dont la température de fusion est supérieure à 2000°C. Il faut alors soit utiliser un fondant pour réaliser la fusion et dans ce cas le flux de résidus est encore augmenté, soit travailler à haute température. Mais dans ce dernier cas le chlorure de calcium et le sulfate de calcium formés lors de la neutralisation des gaz acides se décomposent pour reformer du chlore et de l'anhydride sulfurique, ce qui revient à annuler l'opération de traitement des fumées.

Une autre solution consiste à laver ces résidus puis à évaporer l'eau de lavage et à cristalliser les sels dissous. Mais un simple lavage n'est que rarement envisageable pour deux raisons en particulier.

Une première raison est que la chaux, le sulfate de calcium et le fluorure de calcium sont très peu solubles dans l'eau. on ne peut donc les éliminer par un simple lavage à l'eau.

Une deuxième raison est qu'après dissolution de la chaux on obtient une solution de chaux saturée dont le pH est très basique. Dans ces conditions, le plomb et le zinc sont relativement solubles sous la forme, respectivement, d'ion plombate (HpbO₂)-et d'ion zingate (HznO₂) -. Il faut prévoir un traitement des eaux de lavage pour éliminer le plomb et le zinc en solution.

De plus, après lavage des cendres, le résidu solide lavé contient toujours de la chaux qui représente un réservoir de pollution par lessivage et solubilisation des métaux tels que le plomb et le zinc.

Pour atteindre ce but, le procédé selon l'invention comporte les caractéristiques de la revendication 1.

L'invention telle que définie dans la revendication 1 se distingue du document EP-A-0518606 par le fait que la solution du carbonate de métal alcalin est non saturée, mais également par le fait que ce document est totalement tacite sur le traitement des produits des réactions de neutralisation des gaz acides, du réactif en excès et des cendres volantes.

Un procédé pour le traitement final des résidus produits dans une installation de combustion de déchets est certes décrit dans le document DE-A-41 09044, mais les produits de départ utilisés dans ce procédé ne sont pas ceux que l'on obtient à la sortie de l'installation selon le document DE-A-0518 606. Par conséquent,le document DE-A-41 09044 n'affecte également pas la brevetabilité de la revendication 1.

D'autres caractéristiques avantageuses de l'invention sont décrites dans des revendications dépendantes.

L'invention sera mieux comprise et d'autres buts, caractéristiques, détails et avantages de celle-ci apparaîtront plus clairement au cours de la description explicative qui va suivre faite en référence aux dessins annexés.
La figure 1 illustre schématiquement une installation de traitement conforme au principe de l'invention, cette installation comprenant une station de lavage.
La figure 2 illustre schématiquement une variante de l'installation représentée sur la figure 1, cette installation comprenant alors un four de fusion.

Le procédé de traitement des effluents produits lors de l'incinération des déchets ménagers et/ou industriels, selon l'invention, consiste à transferer les polluants de la phase gazeuse à la phase solide, puis à laver ou à fondre cette phase solide, puis à laver ou à fondre cette phase solide pour obtenir soit un résidu solide lavé exempt de produits nocifs pour le milieu naturel, soit un résidu solide vitrifié dans lequel les polluants sont piégés.

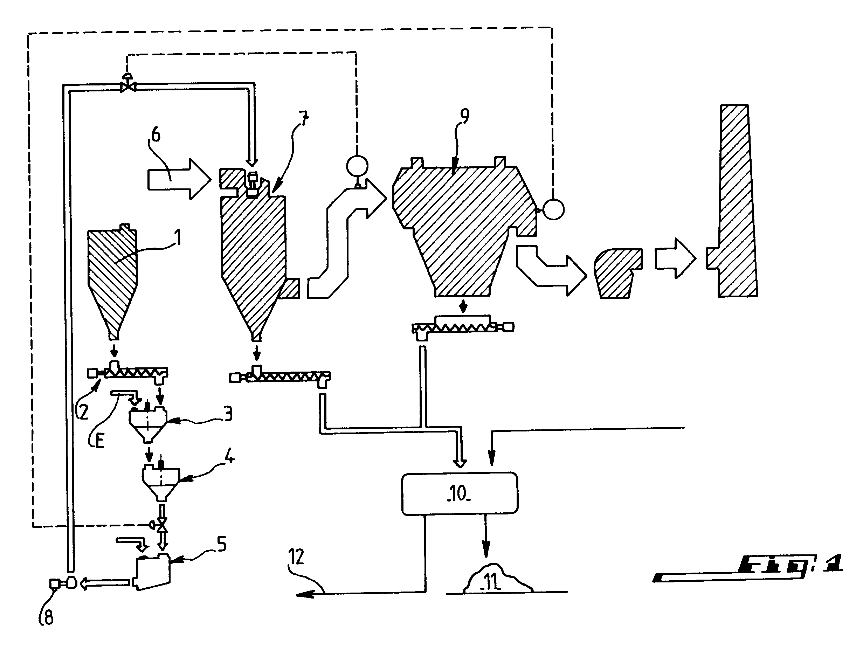

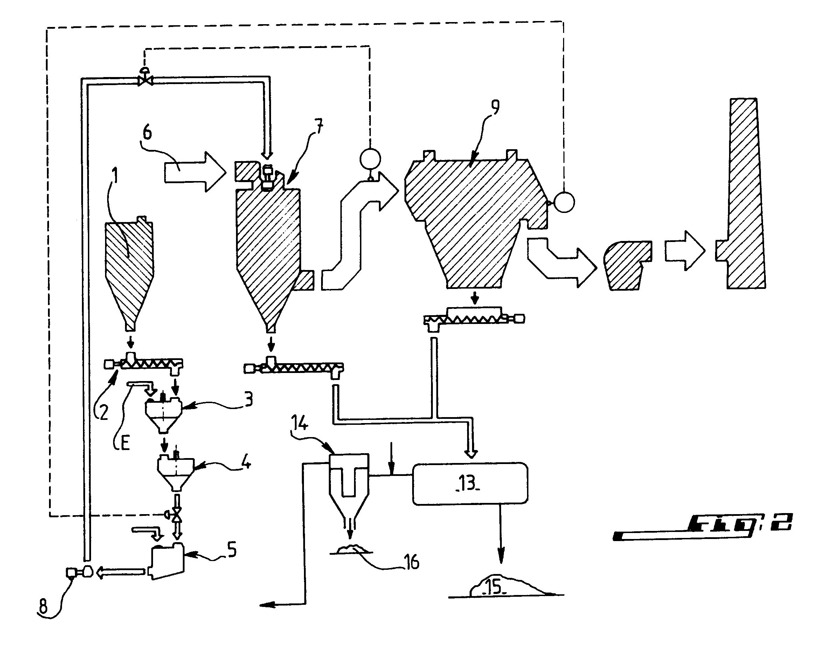

Pour transférer les polluants de la phase gazeuse à la phase solide, l'installation représentée sur les figures 1 et 2 comprend un silo 1 cylindrique à fond conique dans lequel est stocké un carbonate de métal alcalin, de préférence du carbonate de sodium. Par un système de dosage 2 le carbonate est envoyé dans un bac de préparation 3 où il est solubilisé dans de l'eau E. Cette solution est ensuite transvasée dans un bac de service 4 avant de passer dans un bac d'alimentation 5 où elle est diluée. La solution de carbonate de sodium est ensuite injectée en même temps que les fumées 6 produites par l'incinération des déchets ménagers et/ou industriels dans un réacteur en acier 7 par l'intermédiaire d'une turbine de pulvérisation 8.

La réaction de neutralisation des gaz acides (SO₂, SO₃, HF, HCl) qui conduit à la formation des sels de sodium correspondants (NaCl, NaF, Na₂SO₄) et la réaction d'adsorption des métaux lourds gazeux ainsi que des composés organiques gazeux sur les cendres volantes entraînées par les fumées ont lieu dans le réacteur 7, en phases hétérogènes solides-gaz.

Dans cette étape, les gaz sont refroidis à environ 130°C.

Pour favoriser l'adsorption du mercure, des dioxines et des furanes, on peut ajouter du charbon actif dans ce réacteur 7. La forte solubilité du carbonate de sodium dans l'eau permet d'injecter une quantité suffisante de réactif de neutralisation tout en restant en phase liquide, ce qui permet d'éviter les phénomènes de bouchage et d'érosion de l'installation.

De plus, au contact des fumées chaudes, l'eau de la solution de carbonate de sodium s'évapore rapidement et le carbonate de sodium se cristallise en particules très fines, de dimensions voisines du micromètre. La surface de réaction de neutralisation est alors très importante et la réaction ne nécessite plus qu'un faible excès de carbonate de sodium par rapport à la stoechiométrie, ce qui permet de limiter la quantité des résidus solides à traiter ensuite.

Par ailleurs le chlorure de sodium, produit de la réaction de l'acide chlorhydrique sur le carbonate de sodium n'est pas un sel déliquescent : il n'y a donc plus de risque de colmatage des circuits de transport des résidus solides.

On sépare ensuite les particules solides comprenant les cendres volantes, les produits de réaction et le réactif en excès dans lesquelles les métaux sont adsorbés, par filtration dans un dépoussiéreur 9. Ce dépoussiéreur 9 peut être constitué d'un filtre électrostatique ou à manche ou analogue.

Les particules collectées sous le dépoussiéreur 9 sont ensuite mélangées aux produits des réactions de neutralisation et aux réactifs en excès collectés en sortie du réacteur 7.

Ce mélange M est ensuite soit lavé dans une station de lavage 10 représentée en figure 1, soit fondu dans un four de fusion 13 représenté en figure 2.

Lorsque le mélange M est lavé, les produits des réactions de neutralisation de l'acide chlorydrique, de l'anhydride sulfurique, et de l'acide fluorhydrique sont des sels de sodium présentant une solubilité suffisamment élevée pour être éliminés par un simple lavage.

Même si un excès de carbonate de sodium a été nécessaire pour la réalisation des réactions de neutralisation, la forte solubilité du carbonate de sodium dans l'eau permet de l'éliminer totalement au cours de ce simple lavage.

De plus, cet excès peut être partiellement recyclé en utilisant une partie de l'eau de lavage pour préparer la solution de neutralisation contenant le carbonate de sodium à injecter dans le réacteur 7.

Par ailleurs, le carbonate de sodium étant une base faible, le problème de la dissolution des métaux lourds comme le plomb et le zinc dans les eaux de lavage ne se pose plus.

Comme on le voit clairement sur la figure 1, le lavage des résidus du traitement au carbonate de sodium permet d'obtenir d'une part un solide 11 lavé exempt de sels solubles et ne présentant plus de danger pour le milieu naturel et, d'autre part une eau 12 contenant des sels dissous constitués des produits de réaction de neutralisation et de l'excès éventuel de réactif. Cette eau de lavage 12 peut ensuite être évaporée pour obtenir la recristallisation de ces sels. Parmi ces sels, on peut citer le chlorure de sodium qui pourra ensuite être recyclé dans d'autres secteurs industriels.

En se reportant à la figure 2, c'est-à-dire dans le cas où le mélange M est fondu dans le four 13, il est ensuite refroidi rapidement pour obtenir un solide vitrifié 15 dans lequel les polluants sont piégés.

Les gaz produits lors de l'opération de fusion sont trempés à l'air, filtrés dans le filtre 14. En sortie de ce filtre 14 on obtient d'une part un résidu solide 16 et d'autre part un flux gazeux qui est renvoyé dans le four de combustion (non représenté) des déchets ménagers et/ou industriels.

Le carbonate de sodium, étant à la différence de la chaux un fondant, la fusion du mélange M peut être réalisée à une température inférieure ou égale à 1100°C.

Ainsi, même si un excès de carbonate de sodium est nécessaire pour neutraliser les gaz acides, cet excès permettra d'améliorer la fusion du mélange M.

Cette température d'environ 1 100°C est suffisamment basse pour éviter la décomposition du sulfate de sodium (Na₂SO₄) et la vaporisation du chlorure de sodium (NaCl), qui sont les produits des réactions de neutralisation de l'acide chlorydrique et de l'anhydride sulfureux par le carbonate de sodium.

L'emploi du carbonate de sodium présente donc l'avantage de permettre la fusion du mélange M sans ajout supplémentaire d'un additif à bas point de fusion, ce qui, de plus, réduit le flux de résidus à stocker, simplifie le procédé de l'installation de traitement des résidus ménagers et/ou industriels car, en particulier, il n'est plus nécessaire de prévoir un système d'introduction de fondant et de mélange de ce fondant avec le mélange M.

Pour le cas où l'emploi d'une température supérieure à 1100°C est nécessaire pour réaliser la fusion des résidus, le chlorure de sodium, à la différence du chlorure de calcium, ne se décompose pas mais se vaporise. On le récupérera alors sous forme solide après la trempe, précédemment citée, des gaz.

## Revendications

1. Procédé de traitement des effluents produits lors de l'incinération des déchets ménagers et/ou industriels du type consistant à :
- neutraliser les gaz acides, contenus dans les fumées chaudes produites par l'incinération desdits déchets, par mise en contact, dans un réacteur, des fumées avec un carbonate de métal alcalin,
- condenser et absorber les métaux lourds, contenus dans lesdites fumées chaudes sur les particules entraînées dans le flux gazeux de ces fumées,
- séparer ensuite par filtration lesdites particules solides de la phase gazeuse, lesdites particules solides étant constituées des produits des réactions de neutralisation des gaz acides, du réactif en excès, et des cendres volantes,
caractérisé en ce que :
- on neutralise lesdits gaz acides contenus dans lesdites fumées chaudes par une solution basique non saturée, dudit carbonate de métal alcalin, pulvérisée et injectée en même temps que lesdites fumées chaudes dans le réacteur (7), ce par quoi l'eau de ladite solution basique non saturée d'un carbonate de métal alcalin s'évapore rapidement et le carbonate de métal alcalin se cristallise en particules très fines, de dimensions voisines du micromètre,
et en ce que :
- le mélange (M) des produits des réactions de neutralisation des gaz acides, du réactif en excès et des cendres volantes est soit lavé, pour obtenir un solide exempt de sels solubles polluants, soit fondu, puis refroidi pour obtenir un solide vitrifié dans lequel les substances polluantes sont piégées.

2. Procédé selon la revendication 1, caractérisé en ce que la solution basique non saturée est une solution de carbonate de sodium

3. Procédé selon la revendication 2, caractérisé en ce que la solution de carbonate de sodium est à une concentration en carbonate de sodium comprise entre environ 20 g/l et environ 200 g/l.

4. Procédé selon la revendication 2, caractérisé en ce que la solution de carbonate de sodium est à une concentration en carbonate de sodium comprise entre environ 50 g/l et environ 150 g/l.

5. Procédé selon la revendication 2, caractérisé en ce que la solution de carbonate de sodium est à une concentration en carbonate de sodium d'environ 100 g/l.

6. Procédé selon l'une des revendications précédentes, caractérisé en ce que pour neutraliser les gaz acides, on utilise un faible excès de carbonate de sodium par rapport à la stoechiométrie de la réaction de neutralisation des gaz acides.

7. Procédé selon la revendication 1, caractérisé en ce que dans le cas où le mélange (M) est lavé, on évapore l'eau issue du lavage du mélange (M) pour obtenir la cristallisation des sels précédemment dissous dans cette eau.

8. Procédé selon l'une des revendications précédentes, caractérisé en ce que, dans le cas où le mélange (M) est lavé, on recycle partiellement l'eau issue du lavage du mélange (M) pour préparer la solution de carbonate de sodium utilisée pour la neutralisation des gaz acides.

9. Procédé selon l'une des revendications précédentes, caractérisé en ce que dans le cas où le mélange (M) est fondu, la fusion est réalisée sans apport de fondant à bas point de fusion.

10. Procédé selon l'une des revendications précédentes, caractérisé en ce que, dans le cas où le mélange (M) est fondu, la température de fusion est inférieure à environ 1 100°C.

11. Produit lavé ou vitrifié obtenu par le procédé selon l'une des revendications précédentes.

## Claims

1. Process for treating effluents from house and/or industrial waste incinerating installations, of the type consisting in :
- neutralizing the acid gases, contained in the hot fumes produced by incinerating said waste, by contacting, in a reactor, the fumes with an alkaline metal carbonate,
- condensing and absorbing the heavy metals, contained in said hot fumes, on the particles driven in the gaseous stream of these fumes,
- then separating by filtration said solid particles from the gaseous phase, said solid particles being formed by products of the neutralization reactions of the acid gases, the excess reagent, and the flying ashes,
- characterized in that :
- said acid gases contained in said hot fumes are neutralized by an unsaturated basic solution of said alkaline metal carbonate sprayed and injected at the same time as said hot fumes in the reactor (7), whereby the water of said un-saturated basic solution of an alkaline metal carbonate is rapidly evaporated, and the alkaline metal carbonate is cristallized into very small particles, of a size of about one micrometre,
and in that :
- the mixture (M) of the products of the neutralization reactions of the acid gases, excess reagent and flying ashes is either washed, for obtaining a solid that is free from polluting soluble salts, or melted, then cooled for obtaining a vitrified solid in which the polluting substances are trapped.

2. Process according to claim 1, characterized in that the un-saturated basic solution is a solution of sodium carbonate.

3. Process according to claim 2, characterized in that the sodium carbonate solution is at a concentration in sodium carbonate which is comprised between about 20 g/l and about 200 g/l.

4. Process according to claim 2, characterized in that the sodium carbonate solution is at a concentration in sodium carbonate which is comprised between about 50 g/l and about 150 g/l.

5. Process according to claim 2, characterized in that the sodium carbonate solution is at a concentration in sodium carbonate of about 100 g/l.

6. Process according to one of the preceding claims, characterized in that, for neutralizing the acid gases, there is used a small excess of sodium carbonate with respect to the stoichiometry of the neutralization reaction of the acid gases.

7. Process according to claim 1, characterized in that, in case the mixture (M) is washed, water from the washing of the mixture (M) is evaporated for obtaining cristallization of the salts previously dissolved in this water.

8. Process according to one of the preceding claims, characterized in that, in case the mixture (M) is washed, water from the washing of the mixture (M) is partially recycled for preparing the sodium carbonate solution which is used for neutralizing the acid gases.

9. Process according to one of the preceding claims, characterized in that, in case the mixture (M) is melted, melting is made without addition of low melting point fluxing agent.

10. Process according to one of the preceding claims, characterized in that, in case the mixture (M) is melted, the melting temperature is lower than about 1,100°C.

11. Washed or vitrified product obtained by the process according to one of the preceding claims.

## Patentansprüche

1. Verfahren zur Behandlung von Abgasen aus Müllverbrennungsanlagen von der Art, darin bestehend:
- die sauren Gase, die in dem heißen, durch die Verbrennung besagten Mülls produzierten Rauch enthalten sind, durch den Kontakt in einem Reaktor des Rauchs mit einem alkalischen Metallkarbonat zu neutralisieren,
- die Schwermetalle zu kondensieren und zu absorbieren, die in besagtem heißen Rauch auf den Partikeln enthalten sind, die in den Gasfluß dieses Rauchs eingebracht werden,
- anschließend durch Filtern besagte feste Partikel von der Gasphase zu trennen, wobei besagte feste Partikel aus Produkten der Neutralisationsreaktion der sauren Gase, der überschüssigen Reagentie und der fliegenden Asche gebildet werden,
dadurch gekennzeichnet, daß:
- man besagte in besagtem heißen Rauch enthaltene saure Gase durch eine ungesättigte basische Lösung aus besagtem alkalischen Metallkarbonat neutralisiert, die zur gleichen Zeit wie der heiße Rauch in den Reaktor (7) gesprüht und eingespritzt wird, wodurch das Wasser besagter ungesättigter basischer Lösung eines alkalischen Metallkarbonats schnell verdampft und das alkalische Metallkarbonat in sehr feinen Partikeln kristallisiert, deren Abmessungen dem Mikrometer nahe kommen,
und daß
- die Mischung (M) der Produkte der Neutralisationsreaktion der sauren Gase, der überschüssigen Reagentie und der fliegenden Asche entweder gewaschen wird, um eine feste Masse ohne verunreinigende lösliche Salze zu erhalten, oder geschmolzen und anschließend abgekühlt wird, um eine verglaste feste Masse zu erhalten, in der die verunreinigenden Substanzen festgehalten werden.

2. Verfahren gemäß Anspruch 1, dadurch gekennzeichnet, daß die ungesättigte basische Lösung eine Natriumkarbonatlösung ist.

3. Verfahren gemäß Anspruch 2, dadurch gekennzeichnet, daß die Natriumkarbonatlösung eine Natriumkarbonatkonzentration hat, die zwischen ungefähr 20 g/l und ungefähr 200 g/l inbegriffen ist.

4. Verfahren gemäß Anspruch 2, dadurch gekennzeichnet, daß die Natriumkarbonatlösung eine Natriumkarbonatkonzentration hat, die zwischen ungefähr 50 g/l und ungefähr 150 g/l inbegriffen ist.

5. Verfahren gemäß Anspruch 2, dadurch gekennzeichnet, daß die Natriumkarbonatlösung eine Natriumkarbonatkonzentration von ungefähr 100 g/l hat.

6. Verfahren gemäß einem der vorherigen Ansprüche, dadurch gekennzeichnet, daß man, um die sauren Gase zu neutralisieren, einen geringen Überschuß an Natriumkarbonat im Verhältnis zur Stöchiometrie der Neutralisationsreaktion der sauren Gase verwendet.

7. Verfahren gemäß Anspruch 1, dadurch gekennzeichnet, daß man in dem Falle, in dem die Mischung (M) gewaschen wird, das aus dem Waschen der Mischung (M) hervorgegangene Wasser verdampft, um die Kristallisierung der vorher in diesem Wasser aufgelösten Salze zu erreichen.

8. Verfahren gemäß einem der vorherigen Ansprüche, dadurch gekennzeichnet, daß man in dem Falle, in dem die Mischung (M) gewaschen wird, das aus dem Waschen der Mischung (M) hervorgegangene Wasser teilweise wieder aufbereitet, um die Natriumkarbonatlösung zuzubereiten, die zur Neutralisierung der sauren Gase verwendet wird.

9. Verfahren gemäß einem der vorherigen Ansprüche, dadurch gekennzeichnet, daß das Schmelzen in dem Falle, in dem die Mischung (M) geschmolzen wird, ohne Zufügen von Schmelzmittel mit niedrigem Schmelzpunkt realisiert wird.

10. Verfahren gemäß einem der vorherigen Ansprüche, dadurch gekennzeichnet, daß die Schmelztemperatur in dem Falle, in dem die Mischung (M) geschmolzen wird, die Schmelztemperatur unterhalb von ungefähr 1.100°C liegt.

11. Gewaschenes oder verglastes Produkt, das durch das Verfahren gemäß einem der vorherigen Ansprüche erhalten wird.
